# EUROPEAN PATENT SPECIFICATION

(11) **EP 4 151 397 B1**
(45) Date of publication and mention of the grant of the patent: **10.07.2024**
(21) Application number: 22196768.0
(22) Date of filing: 21.09.2022
(51) Int. Cl.: B29D 12/02, B29L 12/00, B29C 65/44, B29C 65/00

(54) **JAW FOR A HEATING VICE FOR AN EYEWEAR HINGING-MACHINE**
HEIZKLEMMBACKE FÜR EINE BRILLENSCHANIERMASCHINE
MORS D'ÉTAU DE CHAUFFAGE POUR MACHINE D'INSERTION DE CHARNIÈRES DE LUNETTES

(30) Priority: 21.09.2021 IT 202100024233
(43) Date of publication of application: 22.03.2023
(73) Proprietor: Autonoma Innovazione S.r.l., 31058 Susegana (TV) (IT)
(72) Inventor: GRASSIA, Alessio, 31029 Vittorio Veneto (TV) (IT); GALVANO, Sofia, 31010 Mareno di Piave (TV) (IT); DE CONTI, Mirco, 31010 Godega di Sant'Urbano (TV) (IT); POL, Fabio, 31025 Santa Lucia di Piave (TV) (IT)
(74) Representative: Frare, Paolo

(56) References cited:
- ES-A1- 8 305 622
- GB-A- 2 119 697
- KR-B1- 101 734 774
- SU-A1- 1 348 211
- US-A- 3 916 147

## Description

The present invention refers to a jaw for a heating vice for an eyewear hinging-machine.

Nowadays, it is known to attach the arms of eyeglasses frames to the frame front of such frames by means of hinges that allow the arms to be folded approximately parallel to the frame front so as, for example, to facilitate the storage and transport of eyeglasses.

For this purpose, metal hinges are known which comprise two elements, hinged to each other, which in this text will be referred to as "hinge parts", one of which is attached to the frame front and the other to one of the arms, so as to allow the rotation of that arm with respect to the frame front.

If the frame front is made, in whole or in part, of a thermoplastic material, for example a polymer such as cellulose acetate, the hinge parts can be attached to the frame front, in particular to a portion of it made of thermoplastic material (for example a polymer such as cellulose acetate), by means of a process of melting and subsequently cooling the plastic material, which will be explained in more detail below.

This known type of fixing process is carried out by means of special machines, called "hinging-machines", and involves first of all making, for example by means of milling, two seats for as many hinge parts on the thermoplastic portion of the frame front, in correspondence of where the hinge parts are to be fixed (typically at the sides of the two regions of the frame front intended for the application of the lenses).

Such hinging-machines of the known type comprise a heating vice, equipped with two jaws, made of copper, that can be selectively brought closer together so as to grab a hinge part between them.

After grabbing a hinge part so that it protrudes from the vice with one end intended to be coupled with the frame front, the vice is moved, by means of a special drive, until this end of the hinge part is positioned in proximity to one of the two seats previously obtained in the frame front.

The jaws of the vice are electrically connected to a power supply circuit capable of supplying an alternating electrical voltage to their ends.

When the jaws clamp the hinge part, the latter, being made of an electrically conductive material (usually a metal alloy, such as nickel silver), electrically connects these two jaws; in this condition, the application of an electric voltage to the ends of the jaws generates the passage of an electric current through the jaws and through the hinge part, which heats up due to the Joule effect, increasing its temperature.

The process of fixing the hinge part then involves applying electrical voltage to the ends of the jaws when the hinge part is in the vicinity of the seat formed in the frame front; this hinge part then heats up due to the Joule effect, consequently heating the thermoplastic material in correspondence of the seat, until it softens and partially melts, then flowing into the seat, covering and encapsulating the end of the hinge part contained therein.

When the power supply is interrupted, the hinge part cools, and so does the molten material present in the seat, which solidifies, encapsulating the end of the hinge part positioned in the seat, so that the hinge part is firmly fixed to the frame front of the frame.

This process is then repeated for the other hinge part. An example of these prior art solutions is given in document GB 2 119 697 A, which discloses a jaw in accordance with the preamble of claim 1.

These known solutions, however have the disadvantage of implying high energy consumption; in fact, in order to allow sufficient heating of the hinge part, the current flowing through the circuit comprising it and the two copper jaws, having very low electrical resistance (lower than that of the hinge part), must be approximately 700-1000 Amperes, compared to a voltage at the ends of this circuit of between approximately 1 Volt and 10 Volts, for an energy consumption comprised between about 0.7-10 kW.

The main task of the present invention is to solve the above problem, and thus to realise a jaw for a heating vice for an eyewear hinging-machine that reduces the energy consumption required to heat a hinge part grabbed by a heating vice using such a jaw.

The applicant realised that by using a jaw in the heating vice comprising a steel core, preferably hardened, completely covered with a coating that has a higher electrical resistivity than the core, and such that the overall electrical resistance of the jaw is comprised between 10 and 40 MQ (thus very high, but still allowing an electric current to flow), it is possible to use a much lower electric current than that used in the known technique to achieve heating of the hinge part supported by the heating vice, thus achieving significant energy savings.

In fact, in order to heat by Joule effect a jaw according to the invention, the latter having a much greater electrical resistance (of several orders of magnitude) than that of a traditional copper jaw, a very reduced current is sufficient (the electrical power dissipated being equal to the resistance times the square of the current), with a voltage of the same order of magnitude as that used in the known technique; in this case, the hinge part heats up mainly by contact with the jaw according to the invention, while its heating by the Joule effect is very small, this hinge part having a very low electrical resistance (several orders of magnitude lower than the jaw according to the invention).

The above effect is even better if the heating vice uses both jaws according to the invention.

In particular, the task and purposes according to the present invention are achieved by a jaw for an eyewear hinging-machine comprising a steel core, which is completely covered with a coating made of a material having a higher electrical resistivity than steel, and such that the overall electrical resistance of the jaw is comprised between 10 and 40 MΩ.

Other advantageous features of the jaw according to the invention are stated in the dependent claims.

The features and advantages of this invention will be more evident from the following description, which is illustrative and not limiting, referring to the attached schematic drawings, in which:
- figure 1 is a schematic front view of an advantageous embodiment of a hinging-machine for eyewear making use of a heating vice provided with jaws according to the invention;

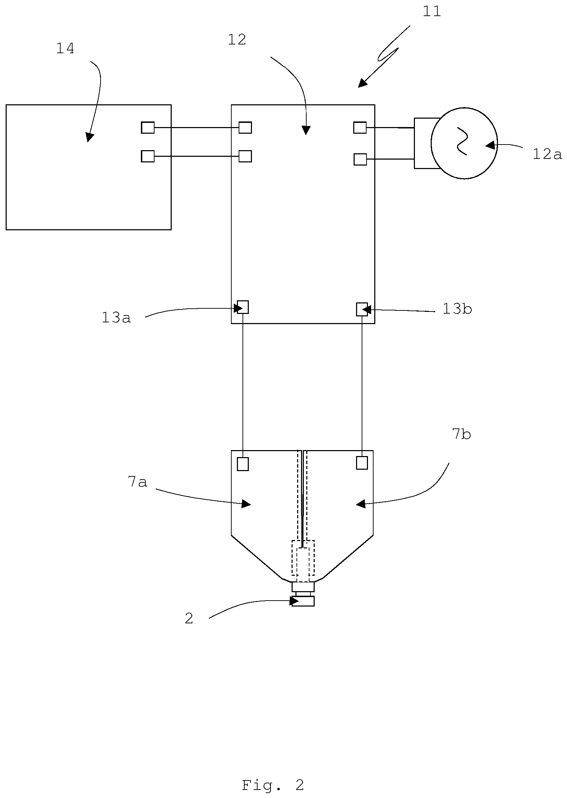

- figure 2 is a schematic representation of an advantageous embodiment of the heating system of a heating vice using two jaws according to the invention;

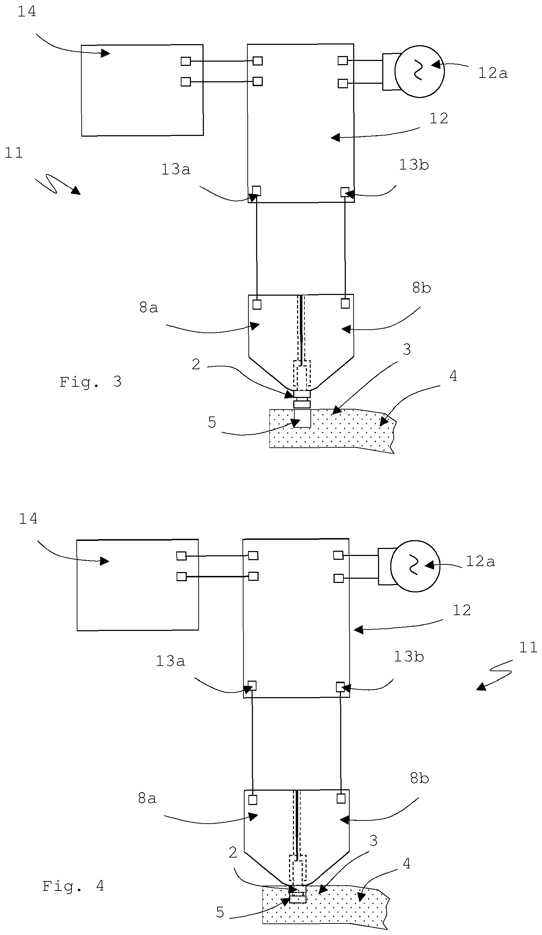

- figures 3 and 4 are two schematic representations of the heating system of figure 2 during two steps of its use;

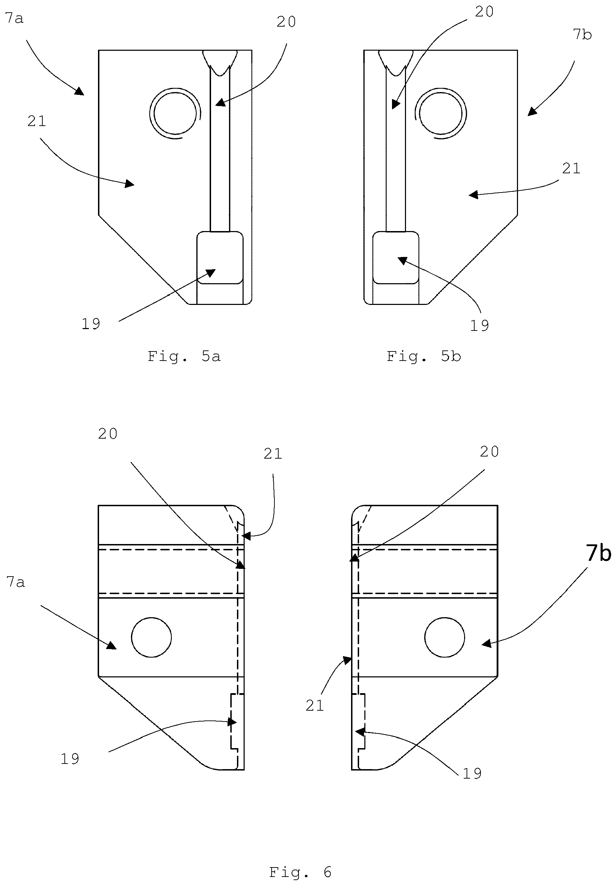

- figures 5a and 5b are two views of an advantageous embodiment of the faces facing each other during use of two jaws according to the invention;
- figure 6 is a front view of the jaws of figures 5a and 5b, facing each other in the position of use;

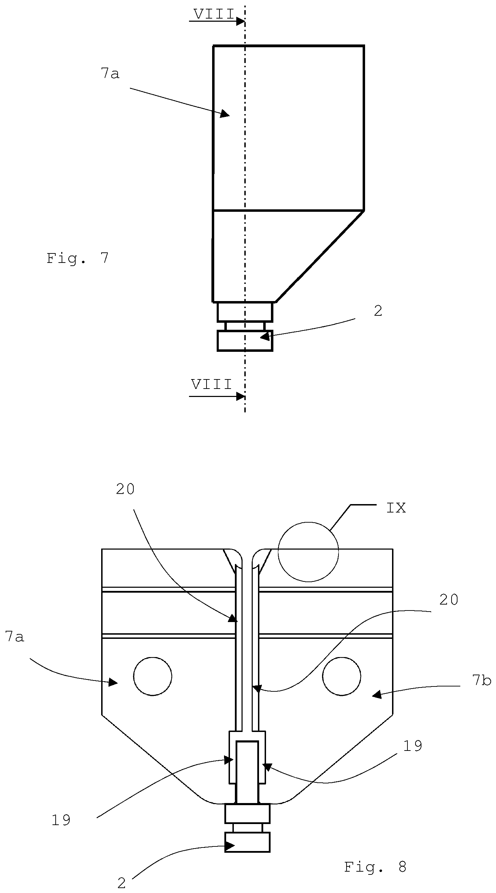

- figure 7 is a side view from the left of the jaws of figure 6, in a condition where they are grabbing a hinge part;
- figure 8 is a section operated according to the section plan VIII-VIII of figure 7;

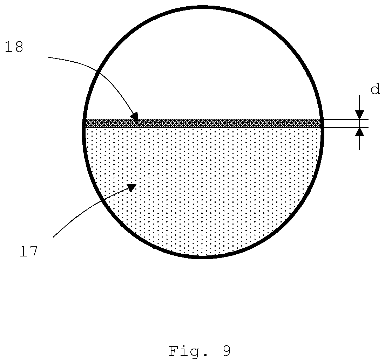

- figure 9 is an enlarged detail of figure 8.

In the appended figures, two jaws 7a and 7b according to the invention are shown (advantageously, but not necessarily each having a conformation specular to the conformation of the other), which will be better described below, usable in a heating vice 6 of a hinging-machine for eyewear, indicated overall by the number 1, capable of fixing a metallic hinge part 2 of a hinge for eyeglasses to a portion 3 of a frame front 4 for eyeglasses frames made of a thermoplastic material, for example a polymer such as cellulose acetate (of which only a detail is illustrated in the accompanying figures).

It is emphasised that the portion 3 may coincide with the entire frame front 4, or it may comprise one or more regions, whether joined or not, thereof.

Advantageously, as in the embodiment illustrated in the appended figures, the hinging-machine 1 may comprise two heating vices 6, each equipped with a pair of jaws 7a and 7b according to the invention.

Advantageously, both jaws 7a and 7b mounted in the heating vice 6 are made according to the invention; in a further advantageous embodiment, however, it is sufficient for one of the jaws to be made according to the invention, while the other can be made of any electrically conductive material, such as copper or aluminium, for example.

In the machine 1, the hinge part 2 is fixed in a seat 5 obtained, e.g. by milling, in a desired position of the portion 3 of the frame front 4.

Milling can be performed in the same machine 1 or, alternatively, in a different machine, not illustrated; milling to obtain the seat 5 is a technology known in the eyewear industry, and is not the subject matter of the present patent, so it will not be described in detail.

Advantageously, the heating vice 6 is capable of selectively bringing the jaws 7a and 7b closer together so as to grab a hinge part 2 of a hinge for eyeglasses between them; advantageously, for this purpose, the heating vice 6 comprises drive means 8 (e.g., an electromechanical actuator, such as a gear motor, not illustrated) capable of moving one or both of the jaws 7a and 7b, and in particular of bringing them closer together and further apart.

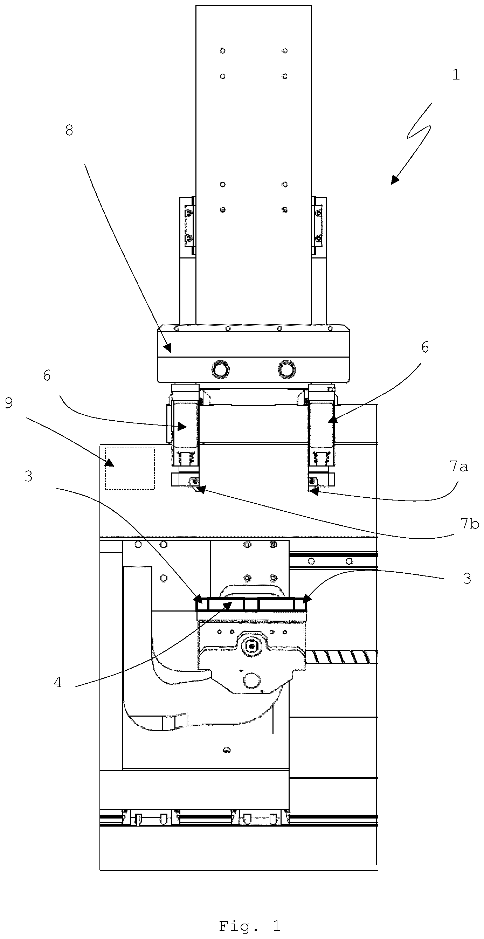

Preferably, the drive means 8 are controlled by an electronic control device 9, such as a PLC (programmable logic controller) or a microcontroller, e.g. at least partially integrated into the drive means 8, or external to the drive means 8, and electrically connected (in a wired or wireless manner) thereto. The electronic control device 9 is shown schematically in figure 1 as a dashed rectangle.

In an advantageous embodiment, the electronic control device 9 is the same (e.g. a programmable logic controller, or PLC) that also controls the other functions (e.g. switching on, switching off, etc.) of the machine 1.

Advantageously, the hinging-machine 1 includes a heating system 11 of the heating vice 6.

In an advantageous embodiment, the heating system 11 comprises an electronic board 12, electrically connected to the jaws 7a and 7b to provide a desired electrical supply current, preferably direct; preferably, the electronic board 12 is configured to measure the electrical voltage between two measuring points 13a, 13b of said electronic board 12 to which the jaws 7a, 7b are electrically connected.

The electrical supply current is preferably comprised between 1 and 130 Ampere, more preferably, but not necessarily, between 1 and 65 Ampere.

Advantageously, the electronic board 12 can be powered by an alternating voltage, e.g. the mains voltage, schematically represented as a generator 12a; in an advantageous embodiment, the electronic board 12 is capable of converting the alternating voltage from the generator 12a into direct voltage. In a further advantageous embodiment, the generator 12a is connected to the electronic board 12 by means of a converter, not illustrated, capable of converting the alternating voltage from the generator 12a into direct voltage.

In an advantageous embodiment, the heating system 11 comprises electronic control means 14 operationally connected to the electronic board 12 to control it.

Such electronic control means 14 can be advantageously integrated into the electronic board 12 or, as in the embodiments illustrated in the attached figures, can be a separate entity from the electronic board 12, and be electrically connected thereto, e.g. in a wired manner, or with a wireless connection.

In an advantageous embodiment, such electronic control means 14 may comprise or consist of a PLC or microcontroller.

In an advantageous embodiment, the electronic control means 14 are the same (e.g. a programmable logic controller, or PLC) that also control the other functions (e.g. switching on, switching off, etc.) of the machine 1.

In a preferred embodiment, the electronic control means 14 coincide with the electronic control device 9 controlling the drive means 8, and more preferably also control the other functions of the machine 1.

In an advantageous embodiment, the electronic control means 14 are configured to (i.e., are "programmed so as to", or "have an electronic topology realised so as to") receive from the electronic board 12 a signal related to the electric voltage measured between the two measuring points 13a and 13b, and to cause the electronic board 12 to supply the jaws 7a, 7b with a direct, modified electric current, calculated by the electronic control means 14 as a function of the signal related to the measured electrical voltage.

In other words, the electronic control means 14 are preferably configured to modify the current delivered to the jaws 7a and 7b by the electronic board 12, more preferably according to a data item related to the voltage (for example the value of such voltage) measured at the two measuring points to which such jaws 7a and 7b are electrically connected; in this way, the current flowing through the jaws 7a and 7b is adapted to the variations of the electrical resistance of the electrical circuit comprising such jaws 7a and 7b and the hinge part 2 supported thereby (since the value of the voltage measured at the measuring points 13a and 13b, the supplied current being constant, depends only on the value of the overall resistance of the circuit comprising the jaws 7a and 7b and hinge part 2) which makes it possible to prevent the hinge part 2 being crossed by an excessive current and overheating, ruining the frame front 4, and at the same time ensures heating of such hinge part 2 which allows sufficient melting of the seat 5 of the portion 3 of such frame front 4 to which the hinge part 2 is to be fixed.

In a further advantageous embodiment, not illustrated herein, the heating system 11 may comprise one or more further electronic boards electrically connected to the jaws 7a and 7b, in parallel with the electronic board 12, to provide the jaws 7a and 7b with a desired further electrical supply current, preferably direct, and to measure a further electrical voltage between two further measurement points of the further electronic board to which the jaws 7a and 7b are electrically connected; in this case, the electronic control means 14 are preferably operationally connected to the further electronic board to control it, and are configured to receive from such further electronic board a signal related to the further electrical voltage measured between the two further measuring points, and to have the further electronic board deliver to the jaws 7a and 7b a further modified, preferably direct, electric current calculated by the electronic control means 14 according to the signal related to the further electrical voltage measured.

Advantageously, the one or more further electronic boards can be powered by an alternating voltage, e.g. the mains voltage, which they can advantageously convert to direct voltage themselves, or they can be connected to a converter capable of converting an alternating voltage, e.g. the mains voltage, to direct voltage.

According to the invention, at least one of the jaws 7a and 7b, preferably both, comprise a core 17, made of steel, preferably hardened, more preferably of the type AISI 420, completely covered with a coating 18 made of a material having an electrical resistivity higher than that of steel, and such that the total resistance of the respective jaws 7a and 7b is comprised between 10 and 40 MΩ, preferably between 20 and 25 MΩ.

It should be emphasised that these electrical resistance values are very high compared, for example, to those that could be obtained by making copper jaws (values in the order of a fraction of an Ohm), and also compared to the electrical resistance of common hinge parts 2 for eyeglasses hinges (which in known types of hinge parts is less than 1 Ω); however, these electrical resistance values, although very high, still allow an electric current to flow.

In preferred embodiments, the coating 18 is made of the material commonly known as DLC (an acronym for "Diamond-Like Carbon", i.e. a class of amorphous carbon material that exhibits some of the properties typical of diamond), or is made of a chromium oxide (CrNOx), or an Aluminium Chromium Nitride (AlCrN) material.

Advantageously, the coating 18 has a thickness d comprised between 2 and 4 microns, more preferably between 3 and 3,5 microns.

The embodiment in which the coating 18 is made of DLC is the most advantageous. This DLC coating has, in addition to high electrical resistance, a high degree of hardness, which guarantees high abrasion resistance and thus a very long service life.

In addition, DLC has remarkable self-cleaning properties, which prevent the depositing on the jaws 7a and 7b of any residual thermoplastic material melted and then resolidified coming from the frame front 4, which could compromise the passage of current between the jaws 7a and 7b and the hinge part 2.

The use of steel, in particular hardened steel (a very compression-resistant material), preferably of the AISI 420 type, for the core 17, ensures that the coating 18, in particular in the case of a DLC coating 18 (it is in fact hard, but very fragile), does not break when subjected to the closing pressure of the heating vice 6.

The applicant has found that by using at least one of the jaws 7a and 7b, preferably both, according to the invention, and thus with very high electrical resistance values (such as those obtained by using a coating 18 of one of the above materials, and in particular DLC), in particular higher by several orders of magnitude than the resistance of the hinge part 2 (which in hinge parts of the known types is less than 1 Ω), for example comprised between 10 and 40 MΩ, more preferably between 20 and 25 MΩ, most of the heat generated by the Joule effect due to the passage of current is generated by the jaws 7a and 7b according to the invention, which then transmit it by contact to the hinge part 2, heating it.

In fact, since the value of the electrical resistance of the jaws 7a and 7b according to the invention is very high, the heat produced thereby by the Joule effect (equal to the value of the electrical resistance multiplied by the square of the current) is high even if the electric current flowing through the jaws 7a and 7b is relatively low, e.g. less than 150 Ampere, but also less than 65 Ampere.

In contrast, the heat produced by the Joule effect from hinge part 2 when passed through by such an electric current is rather low, since such hinge part 2 has a very low electrical resistance value.

The hinge part 2 therefore heats up mainly through its contact with the very hot surface of jaw or jaws 7a and 7b according to the invention.

This "indirect" heating mechanism, so to speak, makes it possible to prevent a sudden rise in the temperature of the hinge part 2. It also facilitates the possible regulation of this temperature, e.g. by means of the adjustment of the value of the electric current as a function of the voltage measured at the ends of the circuit formed by the jaws 7a and 7b and the hinge part 2 (which in turn depends on the value of the electric resistance of these elements, dependent on their temperature).

In this way, it is advantageously possible to prevent the temperature of the hinge part 2 itself from rising rapidly to values that could damage the frame front 4.

In advantageous embodiments, such as those illustrated in the attached figures, the jaws 7a and 7b have, in a front view, a substantially rectangular trapezoid shape; other conformations are however possible.

Advantageously, the jaw 7a, 7b has, on one of its internal surfaces 21 suitable for engaging, in use, with a metallic hinge part 2 of an eyeglasses hinge, a first recess 19, shaped to contain, without contact, a portion of the hinge part 2, so as to reduce the contact surface between the jaw 7a, 7b and the hinge part 2 itself, and consequently increase the contact resistance between these components.

In fact, it was found that a high contact resistance between a jaw 7a, 7b according to the invention and the hinge part 2 increases the Joule effect heating of the contact area between the jaw 7a and 7b and the hinge part 2, increasing the heating of the latter for the same electric current, which further reduces energy consumption.

Advantageously, the jaw 7a and 7b is provided, on the inner surface 21, with a duct 20, communicating with the recess 19, arranged in such a way as to put in fluid communication the recess 19 with the outside of the jaw 7a and 7b, so as to allow a jet of air, e.g. compressed air, to be blown into the recess 19, and remove some of the heat from the hinge part 2 and the jaw 7a and 7b, thus helping to prevent them from overheating.

The operation of the invention is described in the following in relation to its use in a heating vice 6 of a hinging-machine 1 in which a frame front 4 of an eyeglasses frame has been loaded, after the seats 5 for the hinge parts 2 have already been obtained.

A hinge part 2 can be loaded into the heating vice 6 by operating the drive means 8 thereof until this hinge part 2 is grabbed between the two jaws 7a and 7b.

In a preferred embodiment, such as the one illustrated in the appended figures, both jaws 7a and 7b of the heating vice 6 are made according to the invention; however, it is sufficient for one of them to be made according to the invention, while the other can be made of any conductive material, e.g. copper or aluminium, capable of allowing the passage of electric current.

The heating vice 6 is then moved, e.g. by means of a special drive of the machine 1, not illustrated, until the hinge part 2 is brought into a desired position in the vicinity of one of the seats 5 of the frame front 4.

At this point, the heating system 11 can be activated to circulate an electric current in the circuit defined by the jaws 7a, 7b and the hinge part 12; the passage of such a current, even if relatively low (for example less than 130 Ampere or 65 Ampere) in the at least one jaw 7a, 7b according to the invention, in particular due to the high value of the resistance of such jaw 7a, 7b (between 10 and 40 MΩ), causes high heating thereof, and consequently, by contact, of the hinge part 12.

The hinge part 12 can thus reach a temperature sufficient to melt the thermoplastic material of the frame front 4 at the seat 5 in which it is contained, with a relatively low electric current absorption, and consequently relatively low electric power, and in particular less than the electric power absorbed in known solutions.

In a preferred embodiment, such as the one illustrated in the attached figures, in which the heating system 11 comprises the electronic board 12 and the electronic control means 14 described above, the heating of the hinge part 12 can be achieved as follows.

By means of the electronic board 12, a desired electrical supply current, direct, can be delivered to the jaws 7a and 7b.

Advantageously, by means of the electronic board 12 the electrical voltage is measured between the two measuring points 13a and 13b of the electronic board 12 to which the jaws 7a and 7b are electrically connected.

Advantageously, the electronic control means 14, operationally connected to the electronic board 12 to control it, receive a signal related to the electrical voltage measured between the two measuring points 13a and 13b, and calculate, according to this signal, a modified electric current to be delivered by the electronic board 12 to the jaws 7a and 7b.

Advantageously, the electronic control means 14 operate the electronic board 12 to deliver the modified current to the jaws 7a and 7b.

In this advantageous embodiment, real-time regulation of the current delivered to the jaws 7a and 7b and to the hinge part 2 allows the thermal power transmitted to the hinge part 2, and consequently its temperature, to be adjusted in real time, so as to prevent excessive heating of the hinge part, which could damage the frame 4.

In a further advantageous embodiment, not illustrated, in which the heating system 11 comprises one or more further electronic boards electrically connected to the jaws 7a and 7b, in parallel to the electronic board 12, controlled by the electronic control means 14, each of these one or more further electronic boards can also be operated to deliver a desired further electric supply current, direct, to the jaws 7a and 7b and to measure a further electrical voltage between two further measuring points of such further electronic board to which such jaws 7a and 7b are electrically connected; preferably, in this case, the electronic control means 14 also receive a signal related to the further electrical voltage, and more preferably calculate, according to this signal, a further modified, direct, electric current to be supplied by means of the further electronic board to the jaws 7a and 7b.

In this advantageous embodiment, the first electronic board 12 and the one or more further electronic boards, not illustrated, may thus supply, simultaneously or at different instants, respectively, the supply current and one or more further supply currents, or the modified electric current, to the circuit comprising the jaws 7a and 7b and the hinge part 2, so as to broaden the range of possible currents which may flow through such components.

It has thus been ascertained how the jaw according to the invention solves the above-mentioned task, since, thanks to its high electrical resistance with respect to the hinge part, and in particular with respect to the jaws used in the known technique, it is possible to obtain a high heating of such jaw, and therefore, by contact, of the hinge part, by supplying it with very low electrical current values compared with those used in the known technique, with a supply voltage of the order of that used in the known technique, thus greatly reducing the power consumed by a heating vice using such a jaw.

Moreover, the jaw according to the invention, being made primarily of steel, with a very thin coating of a material with higher electrical resistivity than steel, is relatively inexpensive.

In its particular embodiment in which the coating is made of DLC, the jaw according to the invention is also highly resistant to abrasion, thereby increasing its service life; in this advantageous embodiment, the jaw according to the invention is also self-cleaning, preventing any residues of molten thermoplastic material from the treated frames from being deposited on it.

Finally, it is clear that the jaw according to the invention described herein is susceptible to numerous modifications or variations, all of which are within the scope of the invention; moreover, all of the details are replaceable by technically equivalent elements without departing from the scope of the appended claims.

## Claims

1. Jaw (7a, 7b) for an eyewear hinging-machine (1), **characterised by** the fact of comprising a core (17) made of steel, completely covered with a coating (18) made of a material with an electrical resistivity higher than that of steel, and such that the overall electrical resistance of said jaw (7a, 7b) is comprised between 10 and 40 MΩ.

2. Jaw (7a, 7b), as in claim 1, wherein the overall electrical resistance of said jaw (7a, 7b) is comprised between 20 and 25 MΩ.

3. Jaw (7a, 7b), as in claim 1 or 2, wherein said core (17) is made of hardened steel.

4. Jaw (7a, 7b), as in claim 3, wherein said core (17) is made of steel of the AISI 420 type.

5. Jaw (7a, 7b), as in one or more of previous claims, wherein said coating (18) is made of the material known as DLC (Diamond-Like Carbon), or is made of a chromium oxide (CrNOx), or of a material based on Aluminium Chromium Nitride (AlCrN).

6. Jaw (7a, 7b), as in one or more of previous claims, wherein said coating (18) has a thickness (d) comprised between 2 and 4 microns.

7. Jaw (7a, 7b), as in claim 6, wherein said coating (18) has a thickness (d) comprised between 3 and 3,5 microns.

8. Jaw (7a, 7b), as in one or more of previous claims, comprising, on an inner surface (21) of it suitable for engaging, when in use, with a metallic hinge part (2) of a hinge for eyeglasses, a first recess (19) shaped in such a way to contain, without contact, a portion of said hinge part (2), so as to reduce the surface of contact with it.

9. Jaw (7a, 7b), as in claim 8, comprising, on said inner surface (21), a duct (20), communicating with said recess (19), arranged in such a way to put in fluid communication said recess (19) with the outside of said jaw (7a,7b).

10. Heating vice (6) for an eyewear hinging-machine (1), **characterized by** the fact of comprising a jaw (7a, 7b) according to one or more of the preceding claims.

## Patentansprüche

1. Backe (7a, 7b) für eine Brillenscharniermaschine (1), **dadurch gekennzeichnet, dass** sie einen Kern (17) aus Stahl umfasst, der vollständig mit einer Beschichtung (18) aus einem Material mit einem höheren elektrischen Widerstand als Stahl bedeckt ist, und zwar so, dass der elektrische Gesamtwiderstand der Backe (7a, 7b) zwischen 10 und 40 MΩ liegt.

2. Backe (7a, 7b) nach Anspruch 1, wobei der elektrische Gesamtwiderstand der Backe (7a, 7b) zwischen 20 und 25 MΩ liegt.

3. Backe (7a, 7b) nach Anspruch 1 oder 2, wobei der Kern (17) aus gehärtetem Stahl hergestellt ist.

4. Backe (7a, 7b) nach Anspruch 3, wobei der Kern (17) aus Stahl des Typs AISI 420 hergestellt ist.

5. Backe (7a, 7b), nach einem oder mehreren der vorhergehenden Ansprüche, wobei die Beschichtung (18) aus dem als DLC (Diamond-Like Carbon) bekannten Material oder aus einem Chromoxid (CrNOx) oder aus einem Material auf Basis von Aluminiumchromnitrid (AlCrN) hergestellt ist.

6. Backe (7a, 7b), nach einem oder mehreren der vorhergehenden Ansprüche, wobei die Beschichtung (18) eine Dicke (d) zwischen 2 und 4 Mikron aufweist.

7. Backe (7a, 7b) nach Anspruch 6, wobei die Beschichtung (18) eine Dicke (d) zwischen 3 und 3,5 Mikron aufweist.

8. Backe (7a, 7b) nach einem oder mehreren der vorhergehenden Ansprüche, die auf einer Innenfläche (21) davon, die im Gebrauch mit einem metallischen Scharnierteil (2) eines Brillenscharniers in Eingriff gebracht werden kann, eine erste Aussparung (19) umfasst, die so geformt ist, dass sie einen Abschnitt des Scharnierteils (2) berührungslos aufnimmt, um die Kontaktfläche mit diesem zu verringern.

9. Backe (7a, 7b) nach Anspruch 8, die auf der Innenfläche (21) einen Kanal (20) umfasst, der mit der Aussparung (19) kommuniziert und so angeordnet ist, dass er die Aussparung (19) mit der Außenseite der Backe (7a, 7b) in Fluidkommunikation bringt.

10. Heizklemme (6) für eine Brillenscharniermaschine (1), **dadurch gekennzeichnet, dass** sie eine Backe (7a, 7b) nach einem oder mehreren der vorhergehenden Ansprüche umfasst.

## Revendications

1. Mors (7a, 7b) pour machine d'insertion de charnières de lunettes (1), **caractérisé en ce qu'**il comprend un noyau (17) en acier, entièrement recouvert d'un revêtement (18) en un matériau ayant une résistivité électrique supérieure à celle de l'acier, et tel que la résistance électrique globale dudit mors (7a, 7b) soit comprise entre 10 et 40 MΩ.

2. Mors (7a, 7b) selon la revendication 1, dans lequel la résistance électrique globale dudit mors (7a, 7b) est comprise entre 20 et 25 MΩ.

3. Mors (7a, 7b) selon la revendication 1 ou 2, dans lequel ledit noyau (17) est en acier trempé.

4. Mors (7a, 7b) selon la revendication 3, dans lequel ledit noyau (17) est en acier de type AISI 420.

5. Mors (7a, 7b), comme dans une ou plusieurs des revendications précédentes, dans lequel ledit revêtement (18) est constitué du matériau connu sous le nom de DLC (carbone de type diamant), ou est constitué d'un oxyde de chrome (CrNOx), ou d'un matériau à base de nitrure de chrome d'aluminium (AlCrN).

6. Mors (7a, 7b), comme dans une ou plusieurs des revendications précédentes, dans lequel ledit revêtement (18) a une épaisseur (d) comprise entre 2 et 4 microns.

7. Mors (7a, 7b) selon la revendication 6, dans lequel ledit revêtement (18) a une épaisseur (d) comprise entre 3 et 3,5 microns.

8. Mors (7a, 7b), comme dans une ou plusieurs des revendications précédentes, comprenant, sur une surface intérieure (21) de celle-ci pouvant s'engager, lors de l'utilisation, avec une pièce métallique de charnière (2) d'une charnière de lunettes, un premier évidement (19) conformé de manière à contenir, sans contact, une partie de ladite partie de charnière (2), de façon à réduire la surface de contact avec celle-ci.

9. Mors (7a, 7b), selon la revendication 8, comprenant, sur ladite surface intérieure (21), un conduit (20), communiquant avec ledit évidemment (19), disposé de manière à mettre en communication fluidique ledit évidemment (19) avec l'extérieur dudit mors (7a, 7b).

10. Étau de chauffage (6) pour machine d'insertion de charnières de lunettes (1), **caractérisé en ce qu'**il comprend un mors (7a, 7b) selon l'une ou plusieurs des revendications précédentes.
